# EUROPÄISCHE PATENTSCHRIFT

(11) **EP 1 976 374 B1**
(45) Veröffentlichungstag und Bekanntmachung des Hinweises auf die Patenterteilung: **30.11.2011**
(21) Anmeldenummer: 07702895.9
(22) Anmeldetag: 19.01.2007
(51) Int. Cl.: A01N 1/02, B01L 3/00, G01N 1/42

(54) **PROBENTRÄGER UND PROBENSPEICHER, INSBESONDERE ZUR KRYOKONSERVIERUNG BIOLOGISCHER PROBEN**
SAMPLE SUPPORT AND SAMPLE STORE, ESPECIALLY FOR THE CRYOPRESERVATION OF BIOLOGICAL SAMPLES
PORTE-ECHANTILLON ET RESERVOIR A ECHANTILLONS, EN PARTICULIER POUR LA CRYOCONSERVATION D'ECHANTILLONS BIOLOGIQUES

(30) Priorität: 27.01.2006 DE 102006003995
(43) Veröffentlichungstag der Anmeldung: 08.10.2008
(60) Teilanmeldung: 09008073.0
(73) Patentinhaber: Fraunhofer-Gesellschaft zur Förderung der angewandten Forschung e.V., 80686 München (DE)
(72) Erfinder: FUHR, Günter, R., 13187 Berlin (DE); ZIMMERMANN, Heiko, 66386 St. Ingbert (DE)
(74) Vertreter: Hertz, Oliver
(86) Internationale Anmeldenummer: PCT/EP2007/000465
(87) Internationale Veröffentlichungsnummer: WO 2007/085385

(56) Entgegenhaltungen:
- EP-A- 1 382 394
- EP-A1- 0 657 215
- WO-A-2005/007290
- DE-A1- 3 903 645
- DE-A1- 10 203 940

## Beschreibung

Die Erfindung betrifft einen Probenträger für mindestens eine biologische Probe, insbesondere zur Kryokonservierung der biologischen Probe, einen Probenspeicher mit einer Vielzahl von Probenträgern, die jeweils zur Aufnahme mindestens einer biologischen Probe eingerichtet sind, und ein Verfahren zur Kryokonservierung biologischer Proben.

Es ist allgemein bekannt, biologische Proben zur Lagerung (Speicherung) und/oder zur Bearbeitung in einen gekühlten, insbesondere gefrorenen Zustand zu überführen (Kryokonservierung). Aus der Praxis sind zahlreiche Typen von Probenträgern mit verschiedenen Formen, Größen und Funktionen bekannt, die in Abhängigkeit von den konkreten Anforderungen einer Konservierungsaufgabe gewählt sind. Beispielsweise werden für große Probenmengen, wie z. B. Blut oder Gewebe, Probenträger in Form von Beuteln, Bechern oder Küvetten (sogenannte Kryoröhrchen) verwendet, während für geringe Probenmengen, wie z. B. Zellsuspensionen Substrate mit Kompartimenten zur Probenaufnahme bevorzugt werden.

Zur sicheren Handhabung einer Vielzahl von Einzelproben sind modulare Probenträger bekannt. Die in DE 102 03 940 A1 beschriebenen modularen Probenträger zeichnen sich durch die lösbare Befestigung von mehreren Substratteilen mit Kompartimenten zur Probenaufnahme an einem gemeinsamen Basisteil aus. Andere modulare Probenträger sind aus DE 3903645 A1 bekannt. Mit der modularen Technik ergeben sich Vorteile für die Handhabung der Proben, insbesondere bei der Entnahme von Teilproben oder der Kombination von verschiedenen Probengruppen. Der modulare Aufbau von Substrat- und Basisteilen kann jedoch Nachteile aufweisen, da Proben in den Kompartimenten Umwelteinflüssen ausgesetzt sein können. Es können sich insbesondere unerwünschte Fremdsubstanzen aus einer gasförmigen oder flüssigen Umgebung oder aus benachbarten Kompartimenten in den Teilproben ablagern. Durch Kontaminationen können die Qualität von Kryoproben vermindert oder die Kryoproben komplett zerstört werden. Zur Vermeidung von Kontaminationen wird in DE 102 03 940 die Verwendung einer Schutzfolie vorgeschlagen, die jedoch einen für viele Anwendungen unerwünschten Zusatzaufwand darstellt und deren Schutzwirkung insbesondere beim Transport von Substratteilen z. B. durch mechanische Einflüsse eingeschränkt sein kann.

Die Aufgabe der Erfindung ist es, einen verbesserten Probenträger bereitzustellen, mit dem die Nachteile der herkömmlichen Techniken, insbesondere bei der Ablage biologischer Proben für die Kryokonservierung, vermieden werden und der insbesondere zur Bildung eines modularen Verbundes für die Aufnahme einer Vielzahl von Proben geeignet ist und einen verbesserten Schutz der Proben gegen Umgebungseinflüsse, insbesondere gegen Kontaminationen aus einer flüssigen oder gasförmigen Umgebung oder aus benachbarten Probenträgern bietet. Der Probenträger soll sich des weiteren durch einen vereinfachten Aufbau auszeichnen und eine verbesserte Handhabung bei der Bildung des Verbundes aus mehreren Probenträgern aufweisen. Die Aufgabe der Erfindung besteht auch in der Bereitstellung eines verbesserten Probenspeichers für die getrennte Aufnahme einer Vielzahl von biologischen Proben, mit dem die Nachteile der herkömmlichen modularen Probenspeicher vermieden werden und der sich durch eine verbesserte Handhabung, insbesondere eine vereinfachte Entnahme von Teilproben, einen erweiterten Anwendungsbereich und einen geringen Platzbedarf auszeichnet. Die Aufgabe der Erfindung besteht auch in der Bereitstellung eines verbesserten Verfahrens zur Kryokonservierung, mit dem die Nachteile der herkömmlichen Techniken vermieden werden.

Diese Aufgaben werden durch einen Probenträger, einem Probenspeicher und ein Verfahren mit den Merkmalen der Patentansprüche 1, 21 und 30 gelöst. Vorteilhafte Ausführungsformen und Anwendungen der Erfindung ergeben sich aus den abhängigen Ansprüchen.

Gemäß einem ersten Gesichtspunkt der Erfindung wird die Aufgabe der Erfindung durch einen Probenträger, insbesondere zur Kryokonservierung biologischer Proben, mit einem Hülsenteil gelöst, das einen Probenaufnahmeraum bildet, wobei das Hülsenteil mit einer Halteeinrichtung zur Fixierung von mindestens einer Probe und mit Träger-Verbindungselementen ausgestattet ist, die an zueinander gegenüberliegenden Seiten des Hülsenteils zur Ankopplung weiterer Probenträger wirksam sind. Das Hülsenteil weist eine Wand auf, die den Probenaufnahmeraum zwischen den Hülsenteilenden umschließt. Die Träger-Verbindungselemente sind zueinander passend geformt, so dass sie im zusammengesetzten Zustand der Hülsenteile von zwei Probenträgern eine allseits geschlossene Verbindung der aneinander grenzenden Hülsenteile bilden. Die Träger-Verbindungselemente sind vorzugsweise komplementär, sich zur Herstellung der geschlossenen Verbindung ergänzend geformt. Der Probenaufnahmeraum eines erfindungsgemäßen Probenträgers ist zur Aufnahme von mindestens einer Probe vorgesehen, die an der Halteeinrichtung des betreffenden Probenträgers oder eines benachbarten Probenträgers angeordnet ist.

Mit der Ausrichtung der Träger-Verbindungselemente an dem Hülsenteil wird eine Bezugsrichtung definiert, die unabhängig vom konkreten Verbindungstyp und der Ausrichtung im Raum hier auch als Stapelrichtung oder Axialrichtung der Probenträger bezeichnet wird.

Gemäß einem weiteren Gesichtspunkt der Erfindung wird die Aufgabe der Erfindung durch die allgemeine technische Lehre gelöst, einen Probenspeicher bereitzustellen, der aus mindestens zwei erfindungsgemäßen Probenträgern zusammengesetzt ist. Der Probenspeicher ist modular aus den Probenträgern hergestellt. Vorteilhafterweise werden durch einen einzigen Vorgang bei der Herstellung der Verbindung von Probenträgern mehrere Funktionen erfüllt. Erstens wird jeder zugefügte Probenträger fest positioniert. Des Weiteren wird der modulare Aufbau des Probenspeichers erweitert. Ferner werden die in den Aufnahmeräumen angeordneten Proben nach außen abgeschirmt. Unabhängig vom konkreten Verbindungstyp und der Ausrichtung im Raum wird hier der Verbund aus Probenträgern als Stapel bezeichnet.

Vorteilhafterweise wird mit dem erfindungsgemäßen Probenträger eine modulare Probendeposition in abgeschlossenen Aufnahmeräumen ermöglicht, so dass eine Probenkontamination aus der Umgebung ausgeschlossen ist. Da jeder Probenträger mit einer Halteeinrichtung zur Fixierung von mindestens einer Probe ausgestattet ist, sind die Proben innerhalb des Probenspeichers voneinander getrennt lokalisiert, so dass auch eine gegenseitige Kontamination von Proben unterbunden ist. Auf zusätzliche Maßnahmen zur Probenabdeckung, wie z. B. eine Schutzfolie, kann verzichtet werden. Der Aufbau des Probenträgers und des Probenspeichers sowie die Handhabung der Probenträger wird erheblich vereinfacht.

Erfindungsgemäß umfasst die Halteeinrichtung des Probenträgers ein Bodenelement, das sich über die Querschnittsfläche des Hülsenteils, vorzugsweise an einem der Hülsenteilenden, erstreckt. Mit dem Bodenelement, vorzugsweise in Form einer ebenen Wand oder Platte, wird der Probenaufnahmeraum im Hülsenteil vorteilhafterweise einseitig verschlossen. Werden mehrere Bodenträger über die Träger-Verbindungselemente verbunden, so wird im zusammengesetzten Zustand ein Stapel von Probenträgern gebildet, deren Probenaufnahmeräume durch jeweils ein Bodenelement voneinander getrennt sind. Der erfindungsgemäße Probenträger hat somit den besonderen Vorteil, dass eine Kontamination zwischen verschiedenen Proben nicht nur durch deren räumliche Trennung, sondern zusätzlich durch die Bereitstellung einer durch das Bodenelement jeweils gebildeten Wand zwischen zwei aneinandergrenzenden Probenräumen ausgeschlossen ist. Es können Probenträger mit Proben verschiedenen Ursprungs zusammengesetzt werden, ohne dass die Gefahr einer gegenseitigen Beeinflussung besteht.

Bei einer ersten Ausführungsform des erfindungsgemäßen Probenträgers bildet das Hülsenteil mit dem Bodenelement eine Topfform, an deren erstem, offenen Ende ein erstes Träger-Verbindungselement und an deren zweitem, durch das Bodenelement geschlossenen Ende auf der Außenseite des Bodenelements ein zweites Träger-Verbindungselement vorgesehen ist. Die Form beider Träger-Verbindungselemente ist so gewählt, dass jeweils die ersten und zweiten Träger-Verbindungselemente aneinandergrenzend angeordneter Hülsenteile zur Bildung der geschlossenen Verbindung zusammenwirken. Durch die Bereitstellung des Bodenelements werden die Aufnahmeräume im zusammengesetzten Zustand des Probenspeichers allseitig geschlossen.

Allgemein kann die Probe unmittelbar im Probenaufnahmeraum deponiert werden, der durch die Wand des Hülsenteils und das Bodenelement begrenzt wird. Erfindungsgemäss ist jedoch vorgesehen, dass das Bodenelement mindestens ein Kompartiment zur Aufnahme der Probe aufweist. Ein Kompartiment ist ein separates Gefäß, das mit dem Bodenelement verbunden ist und dessen Form und Größe in Abhängigkeit von der gewünschten Anwendung gewählt werden kann. Mit dem Kompartiment können vorteilhafterweise die einzelnen Probenvolumen definiert vorgegeben werden. Dabei ergeben sich Vorteile sowohl für die Deposition als auch für die Lagerung von mindestens einer Teilprobe in dem Probenträger. Es können insbesondere herkömmliche Ablagetechniken, z.B. mit Pipetten, Spritzen oder anderen Flüssigkeitszuführeinrichtungen verwendet werden.

Ein weiterer wichtiger Vorteil der Erfindung besteht darin, dass keine Beschränkungen in Bezug auf die Form und Größe des mindestens einen Kompartiments bestehen, das am Bodenelement im Probenaufnahmeraum angeordnet ist. Ein Kompartiment kann z. B. eine Kapillare umfassen, die vorteilhafterweise unter Wirkung von Kapillarkräften mit der Probe beschickt werden kann. Eine Kapillare hat den zusätzlichen Vorteil, dass keine Beschränkungen für die Orientierung des Probenträgers oder des Probenspeichers mit einer Vielzahl von Probenträgern im Raum bestehen. Alternativ kann das Kompartiment ein größeres Gefäß, wie z. B. eine flache Schale, die Vorteile für die Kryokonservierung von Zellkulturen hat, oder einen Becher umfassen, der Vorteile für die Kryokonservierung von großen Probenvolumina, wie z. B. von Blutproben hat.

An einem Bodenelement eines Probenträgers können mehrere Kompartimente vorgesehen sein. Vorteilhafterweise wird damit eine weitere Fraktionierung einer im Probenträger angeordneten Probe in Teilproben und/oder die Bereitstellung von Referenzproben in dem Probenträger ermöglicht.

Vorzugsweise ist das mindestens eine Kompartiment auf der zum Probenaufnahmeraum des zugehörigen Hülsenteils weisenden Seite (Innenseite) des Bodenelements angeordnet, so dass eine Probe wenigstens mechanisch auch in dem Zustand geschützt ist, in dem der Probenträger vom Probenspeicher getrennt ist. Alternativ kann das mindestens eine Kompartiment auf der zum Probenaufnahmeraum des zugehörigen Hülsenteils entgegengesetzten Seite (Außenseite) des Bodenelements angeordnet ist. In diesem Fall können sich Vorteile für die Beschickung des Kompartiments oder den Zugriff auf die Probe ergeben.

Wenn das Bodenelement auf entgegengesetzt zu dem mindestens einen Kompartiment, z. B. auf der Außenseite entgegengesetzt zum Probenaufnahmeraum, ein Dichtungselement aufweist, so ergeben sich Vorteile für die Abdichtung der Kompartimente im Verbund der Probenträger. Mit dem Dichtungselement, z.B. aus einem elastischen Material des einen Probenträgers wird das mindestens eine Kompartiment im Probenaufnahmeraum des jeweils angrenzend angeordneten Probenträgers dicht verschlossen. Vorteilhafterweise wird damit eine Vereinfachung der Handhabung des Probenspeichers dahingehend erreicht, dass ein Austritt der Probe aus den Kompartimenten nicht nur bei Kapillar-Kompartimenten, sondern auch bei größeren Kompartimenten, wie z. B. Schalen und/oder Bechern unabhängig von der Orientierung des Probenspeichers unterbunden wird.

Gemäß einer weiteren Variante der Erfindung weist das Bodenelement ein einzelnes Substrat oder einen Stapel aus mehreren Substraten auf, die jeweils zum adhärenten Anhaften mindestens einer Probe, z. B. in Form einer Flüssigkeitsschicht oder einer tropfenförmigen Probe eingerichtet sind. In diesem Fall ergeben sich Vorteile für die Beschickung des Probenträgers mit Suspensionsproben.

Gemäß einer nicht beanspruchten Alternative umfasst die Halteeinrichtung ein Klemmelement, das mit dem Hülsenteil des Probenträgers verbunden ist. Das Klemmelement ist so angeordnet, dass eine Klemmverbindung mit einer langgestreckten Probenkammer, z. B. mit einer schlauch- oder rohrförmigen Probenkammer hergestellt werden kann, die sich durch den Probenaufnahmeraum oder im zusammengesetzten Zustand des Probenspeichers durch eine Vielzahl von aneinandergrenzenden Aufnahmeräumen erstreckt. Mit dem Klemmelement werden mehrere Funktionen erfüllt. Erstens werden die Probenträger und die Probenkammer relativ zueinander fixiert. Zweitens wird die langgestreckte Probenkammer, die aus einem biegsamen Material besteht, an dem Klemmelement zusammengequetscht, so dass im zusammengesetzten Zustand des Probenspeichers zwischen den Klemmelementen jeweils Teilproben voneinander getrennt werden. Schließlich werden an den Klemmelementen Einschnürungen der Probenkammer gebildet, die im Zustand der Kryokonservierung, insbesondere im gefrorenen Zustand, Sollbruchstellen bilden und damit eine sichere Entnahme von Teilproben erleichtern.

Gemäß einer bevorzugten Variante der Alternative ragt das Klemmelement an einem der Hülsenteilenden vor. Im zusammengesetzten Zustand benachbarter Probenträger befindet sich das Klemmelement im Verbindungselement oder Probenaufnahmeraum des benachbarten Hülsenteils. Das Verbindungselement und/oder der Probenaufnahmeraum ist mit einer Innenkontur versehen, die eine Anlaufschräge für das Klemmelement bildet. Beim Zusammensetzen von Probenträgern wird das Klemmelement an der Anlaufschräge deformiert und so automatisch in einen Klemmzustand überführt.

Ein weiterer Vorteil des erfindungsgemäßen Probenträgers besteht in der Variabilität bei der Auswahl eines Verbindungstyps zwischen den Träger-Verbindungselementen benachbarter Probenträger. Mit einer Bajonett- oder einer Schraubverbindung können sich Vorteile für die Stabilität des Probenspeichers ergeben. Mit einer Steckverbindung und bei einer Magnetverbindung wird das Zusammensetzen der Probenträger vereinfacht. Vorzugsweise sind die Träger-Verbindungselemente so gestaltet, dass im zusammengesetzten Zustand die Aufnahmeräume des Probenspeichers gegenüber der Umgebung gasdicht verschlossen sind.

Ein weiterer Vorteil der Erfindung besteht in der hohen Variabilität bei der Auswahl der Form des Probenaufnahmeraumes und des Hülsenteiles. Das Hülsenteil kann z. B. eine Quaderform aufweisen. Diese Variante kann für die dichte Anordnung von Probenträgern und Probenspeichern von Vorteil sein. Alternativ ist die Form eines geraden Kreiszylinders vorgesehen, wobei sich in diesem Fall Vorteile für ein Platz sparendes, einfaches Zusammensetzen des Probenspeichers und die Kompatibilität mit herkömmlichen Laborgeräten ergeben. Gemäß einer bevorzugten Variante ist das Hülsenteil mit einer Außenkontur versehen, die mindestens eine Eingriffsfläche für ein Werkzeug zur Aufbringung eines Drehmoments auf den Probenträger bildet. Durch ein Drehmoment relativ zur Stapelrichtung der Probenträger wird die Trennung eines Probenträgers von einem Probenspeicher im gefrorenen Zustand erleichtert.

Ein erfindungsgemäßer Probenträger kann mit einem Deckelteil ausgestattet sein, das zum einseitigen Verschluss des Probenaufnahmeraums lösbar mit einem der Träger-Verbindungselemente verbunden ist. Vorteilhafterweise kann ein Stapel von Probenträgern in einem Probenspeicher ein- oder beidseitig durch einen Probenträger mit einem Deckelteil verschlossen sein.

Vorzugsweise weist das Deckelteil mindestens ein Deckel-Verbindungselement auf, welches passend zu einem der Träger-Verbindungselemente des Hülsenteils geformt ist. Alternativ kann auf jeder von zwei entgegengesetzten Seiten des Deckelteils ein Deckel-Verbindungselement angeordnet sein. Jedes der Deckel-Verbindungselemente ist passend zu einem der Träger-Verbindungselemente des Hülsenteils geformt. In diesem Fall kann ein Deckelteil als Zwischenstück in einem Verbund von Probenträgern angeordnet sein. Gemäß einer weiteren Variante kann ein Deckelteil auf einer Seite mehrere Deckel-Verbindungselemente aufweisen, um einen gemeinsamen Träger für mehrere Stapel von Probenträgern zu bilden.

Vorteilhafterweise kann das Deckelteil neben der Verschluss- und/oder Trägerfunktion eine oder mehrere Zusatzfunktionen erfüllen. Hierzu enthält das Deckelteil gemäß einer weiteren Modifizierung der Erfindung wenigstens eine der folgenden Funktionseinrichtungen. Erstens kann eine elektronische Schaltung, wie z. B. ein elektronischer Speicher, ein Transponder, ein Rechnerschaltkreis und/oder ein RFID-System vorgesehen sein, um mit oder an dem Probenspeicher, mit dem das Deckelteil verbunden ist, Informationen zu verarbeiten, insbesondere Informationen ein- oder auszugeben oder zu speichern. Des weiteren kann eine Funktionseinrichtung eine optisch erfassbare Markierung, wie z. B. einen Strichcode oder eine Farbmarkierung, umfassen, um die Identifizierung eines Probenspeichers zu erleichtern. Gemäß einer weiteren Alternative kann ein elektrisches Funktionselement, wie z. B. ein Sensor und/oder eine Anzeigeeinrichtung (z. B. LED) vorgesehen sein, um Betriebszustände des Probenspeichers zu erfassen oder anzuzeigen. Schließlich kann die Funktionseinrichtung als mechanisches Halteelement gebildet sein, um eine Trägerfunktion für den Probenspeicher zu erfüllen.

Erfindungsgemäße Probenträger können sich gemäß weiterer Modifizierungen dadurch auszeichnen, dass sie Leitungselemente enthalten, die sich im zusammengesetzten Zustand der Probenträger im Probenspeicher erstrecken. Es können Leitungselemente von einem oder mehreren Typen vorgesehen sein. Leitungselemente können bei einer ersten Variante elektrische Leiter zur Herstellung einer elektrischen Verbindungsleitung durch die Probenträger und ggf. die Deckelteile umfassen. Des weiteren können optische Leiter, zum Beispiel Lichtleiterfasern vorgesehen sein, die sich im zusammengesetzten Zustand der Probenträger zu einem durchgehenden Lichtleiter verbinden. Weiterhin können Hohlleiter zum Substanztransport vorgesehen sein, durch die beispielsweise ein Kühlmittel, wie flüssiger oder dampfförmiger Stickstoff geleitet werden kann.

Ein erfindungsgemäßer Probenspeicher umfasst einen Verbund einer Vielzahl von erfindungsgemäßen Probenträgern, von denen vorzugsweise mindestens ein Probenträger mit dem Deckelteil ausgestattet ist. Vorteilhafterweise besteht eine hohe Variabilität bei der Gestaltung des Verbundes aus Probenträgern, die in Abhängigkeit von den konkreten Anforderungen der Kryokonservierungsaufgabe gewählt werden kann. Gemäß einer ersten Variante der Erfindung besteht der Probenspeicher aus einer einzigen Reihe von Probenträgern (Probenträger-Stapel). Innerhalb der Reihe sind Probenträger über die Träger-Verbindungselemente mit weiteren Probenträgern oder Deckelteilen verbunden. Ein Vorteil des linearen Stapels von Probenträgern besteht in der eindeutigen Zuordnung der einzelnen Proben zu den Probenträgerpositionen innerhalb des Stapels.

Mit der oben genannten ersten Ausführungsform des Probenträgers enthält der Stapel eine Vielzahl von getrennten Einzelproben. Bei der oben genannten zweiten Ausführungsform des Probenträgers ist vorgesehen, dass sich eine langgestreckte Probenkammer, wie z. B. eine rohr- oder schlauchförmige Probenkammer, durch die lineare Reihe von Probenträgern erstreckt, wobei durch das Zusammendrücken der Probenkammer an den Klemmelementen Teilkammern in den einzelnen Probenträgern gebildet werden.

Gemäß einer zweiten Variante der Erfindung wird ein 2- oder 3-dimensionaler Verbund von Probenträgern geschaffen (Probenträger-Paket), indem mehrere Stapel der Probenträger nebeneinander angeordnet sind. In diesem Fall ergeben sich Vorteile aus der dichten Lagerung einer Vielzahl von Probenträgern im Probenträger-Paket. Die Probenträgerstapel können innerhalb eines Probenträger-Pakets quer zur Stapelrichtung durch Speicher-Verbindungselemente verbunden sein, so dass sich Vorteile für die Stabilität des Substratpakets ergeben. Alternativ können die Probenträgerstapel innerhalb eines Probenträger-Pakets voneinander beabstandet angeordnet sein. Bei dieser Gestaltung ergeben sich Vorteile für die gleichmäßige und schnelle Kühlung durch ein leicht in das Probenträger-Paket eindringendes Kühlmittel.

Gemäß einem weiteren Gesichtspunkt wird die oben genannte Aufgabe der Erfindung durch die allgemeine technische Lehre gelöst, ein Verfahren zur Kryokonservierung biologischer Proben bereitzustellen, bei dem die Proben in erfindungsgemäßen Pröbenträgern abgelegt, anschließend die Probenträger zu einem Probenspeicher zusammengesetzt und dann der Probenspeicher bis zu einer vorbestimmten Kryokonservierungstemperatur abgekühlt wird. Bevorzugte Anwendungen des Verfahrens sind bei der Kryokonservierung von Suspensionsproben (Suspensionen von Zellen, Zellgruppen, Zellbestandteilen), Gewebeproben oder Organproben gegeben.

Die erfindungsgemäße modulare Kryospeichertechnik besitzt die folgenden weiteren Vorteile. Die Probenspeicher stellen selbsttragende Konstruktionen dar, die als solche keine zusätzlichen Halterungen erfordern. Sie besitzen eine hohe mechanische Stabilität, so dass ein unbeabsichtigtes Abtrennen von Probenträgern innerhalb oder außerhalb einer Kühleinrichtung, wie z. B. eines Kryotanks, vermieden und eine zuverlässige maschinelle Manipulierbarkeit erreicht wird. Erfindungsgemäße Probenspeicher sind frei skalierbar. In Abhängigkeit von den Probengrößen und Probenmengen kann ein Probenspeicher mindestens zwei Probenträger oder eine erheblich größere Anzahl von Probenträgern, z. B. 100, 1000 oder mehr, umfassen. Des weiteren ermöglicht die Gestaltung der Probenträger eine platzsparende Anordnung in Form von Stapeln oder Paketen in der Kühleinrichtung.

Weitere Vorteile ergeben sich beim Zugriff auf einzelne Proben innerhalb des Verbundes von Probenträgern in einem Probenspeicher. Bei der Kryokonservierung kommt es bei der Entnahme einzelner Proben aus einem größeren Verbund auf kurze Zugriffszeiten an, um eine unbeabsichtigte Erwärmung der Proben zu vermeiden. Mit dem erfindungsgemäßen Probenspeicher wird ein schneller Zugriff erleichtert, da unabhängig von der Anzahl der Proben, die entnommen werden sollen, nur eine Verbindung zwischen benachbarten Verbindungselementen zu lösen ist. Die Verknüpfung von Probenträgern, Probenträgerstapeln oder Probenträgerpaketen mit Funktionseinrichtungen, wie z. B. Markierungen, elektronischen Chips oder anderen Zusatzelementen, ermöglicht eine breite Funktionalität bei der Verwaltung der Proben, z. B. in einer Kryobank. Die Probenspeicher sind selbst im gekühlten Zustand bei Temperaturen von z. B. bis -200° C für einen drahtlosen, drahtgebundenen oder optischen Datentransfer geeignet. Die einzelnen Probenträger können eine Markierung, wie z. B. die Farbmarkierung, den Transponder, einen bestimmten elektrischen Widerstand, ein Leitungselement oder eine Glasfaser tragen, die durch die Position des Probenträgers innerhalb des Probenspeichers eine Identifizierung ermöglicht oder eine andere Zusatzfunktion erfüllt.

Durch die feste Verbindung der einzelnen Probenträger (gegebenenfalls mit mindestens einem Deckelteil) zu einem Gesamtsystem wird die Herstellung von elektrischen oder optischen Leitungen ermöglicht. Erfindungsgemäß kann der Zusammenhalt des Probenspeichers durch eine Messung der Durchlässigkeit, z. B. des elektrischen Widerstandes oder der Transmission dieser Leitungen auch im gekühlten Zustand überwacht werden.

Weitere Einzelheiten und Vorteile der Erfindung werden aus der Beschreibung der beigefügten Zeichnungen ersichtlich. Es zeigen:
- Figur 1:: verschiedene Varianten der ersten Ausführungsform des erfindungsgemäßen Probenträgers;
- Figur 2:: einen Probenspeicher mit mehreren Probenträgern gemäß Figur 1A in schematischer Schnittansicht;
- Figur 3:: weitere Varianten der ersten Ausführungsform des erfindungsgemäßen Probenträgers in schematischer Schnittansicht;
- Figur 4:: einen nicht beanspruchten alternativen Probenträger in schematischer Schnittansicht;
- Figur 5:: einen Probenspeicher mit einer Vielzahl von Probenträgern gemäß Figur 4 in schematischer Schnittansicht; und
- Figuren 6 bis 10:: verschiedene Varianten erfindungsgemäßer Probenspeicher in schematischer Schnittansicht.

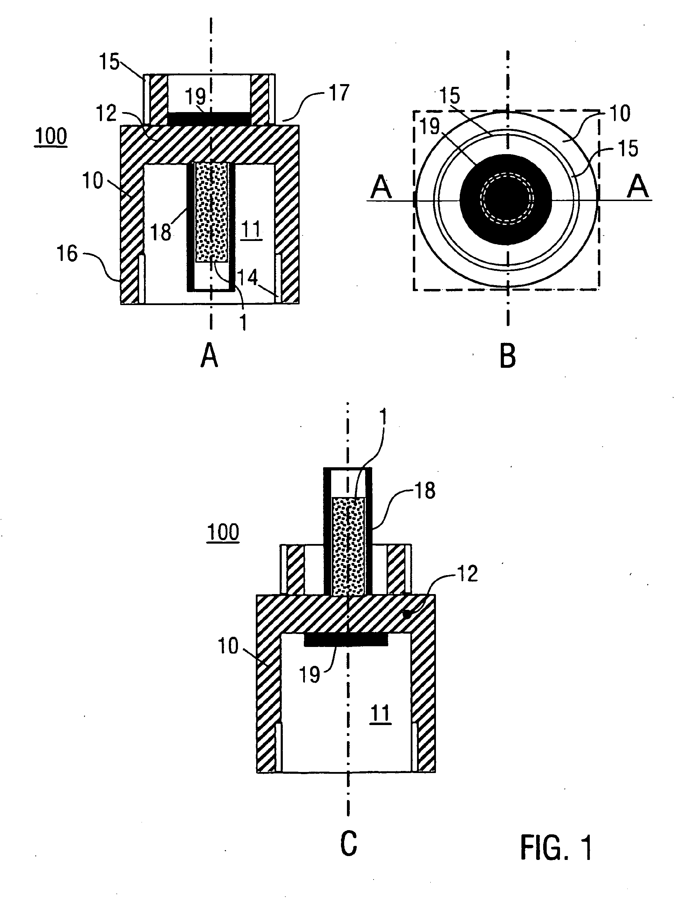

Die erste Ausführungsform des erfindungsgemäßen Probenträgers 100 umfasst, wie in Figur 1 mit verschiedenen Varianten dargestellt ist, das Hülsenteil 10 mit dem Probenaufnahmeraum 11. Die Varianten unterscheiden sich in der Funktion des Hülsenteils als Aufnahme für die zum Probenträger gehörende Probe 1 (Figuren 1A, 1B) oder als Aufnahme für eine zu einem benachbarten Probenträger gehörenden Probe (Figur 1C).

Das Hülsenteil 10 weist die Form eines Hohlzylinders auf. An den axialen Hülsenteilenden 16, 17 sind Träger-Verbindungselemente 14, 15 angeordnet. Die Träger-Verbindungselemente 14, 15 sind zur Bildung einer Schraubverbindung eingerichtet und umfassen hierzu am offenen Hülsenteilende 16 ein Innengewinde 14 und am entgegengesetzten Hülsenteilende 17 einen zylinderförmigen Vorsprung 15 mit einem Außengewinde.

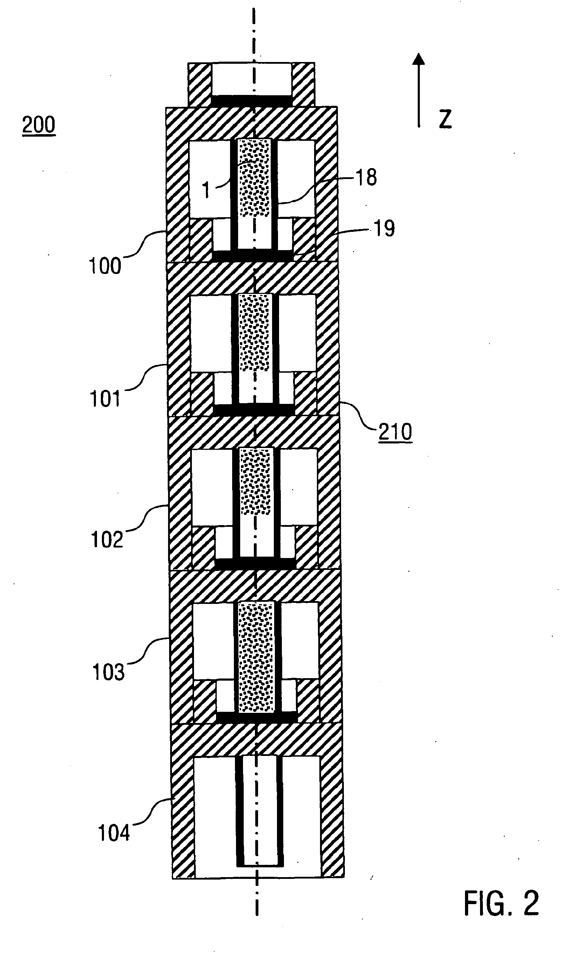

Durch eine Verbindungslinie zwischen den Hülsenteilenden 16, 17, die parallel zur Wand des Hülsenteils 10 verläuft, ist die Bezugsrichtung gegeben, welche für eine Vielzahl zusammengesetzter Probenträger 100 die Stapelrichtung z (siehe Figur 2) bildet. Für das Hülsenteil 10 mit der illustrierten Hohlzylinderform sind die Stapelrichtung und die Ausrichtung der Achse des Hülsenteils 10 identisch.

Das Hülsenteil 10 ist aus einem auch bei tiefen Temperaturen stabilen Kunststoffmaterial, z. B. Polyethylen, Polyurethan, PTFE o. dgl., oder aus einem Metall, z. B. Al, Stahl oder Cu, hergestellt. Das Hülsenteil 10 mit dem Bodenelement 12 und den Träger-Verbindungselementen 14, 15 wird beispielsweise durch Spritzguss hergestellt. Die axiale Länge des Hülsenteils 10 ist beispielsweise im Bereich von 0.1 mm bis 100 mm gewählt, der Durchmesser beträgt z.B. 0.5 mm bis 30 mm.

Gemäß Figur 1A befindet sich das Kompartiment 18 zur Aufnahme der Probe 1 im Probenaufnahmeraum 11. Beim dargestellten Beispiel umfässt das Kompartiment 18 eine einzelne Kapillare, die im Probenaufnahmeraum 11 angeordnet ist. Zur Fixierung und Ausrichtung des Kompartiments 18 ist beim illustrierten ersten Ausführungsbeispiel des Probenträgers 100 das Bodenelement 12 vorgesehen, welches sich über die Querschnittsfläche des Hülsenteils 10 erstreckt und das geschlossene Hülsenteilende 17 bildet. Das kapillarförmige Kompartiment 18 ist an seinem Fuß am Bodenelement 12 mit einem Abstand zur umlaufenden Wand des Hülsenteils 10 befestigt. Die Befestigung erfolgt zum Beispiel durch ein Einsetzen des kapillarförmigen Kompartiments 18 in eine Bohrung im Bodenelement 12. Die kapillarförmigen Kompartimente 18 können an ihren Fußpunkten jeweils eine Belüftungsöffnung (nicht dargestellt) aufweisen.

Der zylinderförmige Vorsprung 15 enthält einen Hohlraum, in dem auf der Außenseite des Bodenelements 12 als Dichtungselement 19 eine elastisch deformierbare Kunststoffschicht, z. B. aus PTFE, angeordnet ist. Allgemein sind die Länge des in den Probenaufnahmeraum 11 ragenden Kompartiments 18 und die Dicke des Dichtungselements 19 so gewählt, dass bei Herstellung der Verbindung zwischen dem Probenträger 100 mit einem weiteren Probenträger das Kompartiment 18 mit dem Dichtungselement 19 verschlossen ist. Alternativ oder zusätzlich zur Positionierung des Dichtungselements 19 auf der Außenseite des Bodenelements 12 kann ein weiteres Dichtungselement am freien Rand des Kompartiments 18 angeordnet sein (nicht dargestellt).

Die Draufsicht in Figur 1B zeigt den axialsymmetrischen Aufbau des Hülsenteils 10 mit dem oberen Träger-Verbindungselement 15 und dem Dichtungselement 19. Abweichend von der gezeigten Hohlzylinderform des Hülsenteils 10 kann dieses eine Außenform mit ebenen Teilflächen, wie z. B. einen Quader (siehe gestrichelte Linie in Figur 1B) oder ein Prisma und eine zylindrische Innenform zur Bildung des Probenaufnahmeraums 11 und des Innengewindes 14 aufweisen. Wenn die Außenform durch ebene Flächen begrenzt wird, so werden vorteilhafterweise Eingriffsflächen für ein Werkzeug zum Trennen, insbesondere Abschrauben eines Probenträgers oder einer Probenträgergruppe vom Probenspeicher gebildet. Mit dem Werkzeug, wie z. B. einem Schraubenschlüssel, Steckschlüssel oder dgl. kann auf den Probenträger ein ausreichend hohes Drehmoment ausgeübt werden, so dass die Entnahme von Probenträgern auch bei tiefen Temperaturen problemlos möglich ist.

Bei der Variante gemäß Figur 1C befindet sich das Kompartiment 18 zur Aufnahme der Probe 1 außerhalb des Probenaufnahmeraums 11. Im zusammengesetzten Zustand von mehreren Probenträgern ist das Kompartiment 18, z. B. die einzelne Kapillare im Probenaufnahmeraum des benachbarten Probenträgers eingeschlossen. Entsprechend ist das Dichtungselement 19 auf der Innenseite des Bodenelements 12 als elastisch deformierbare Kunststoffschicht vorgesehen.

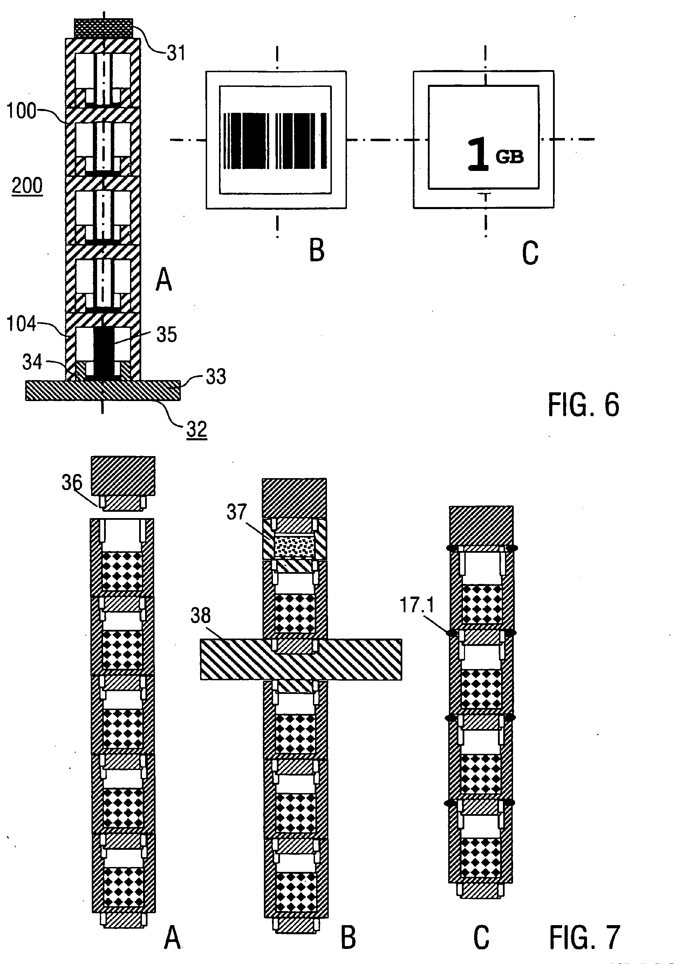

Figur 2 zeigt einen erfindungsgemäßen Probenspeicher 200, der einen einzelnen Stapel 210 mit mehreren Probenträgern 100, 101, 102, ... gemäß Figur 1A umfasst. Der Verbund von Probenträgern gemäß Figur 1C ist entsprechend möglich. Die Probenträger 100, 101, 102, ... sind im Stapel 210 in Stapelrichtung z durch die Verbindung zwischen den Träger-Verbindungselementen (Innengewinde 14 am offenen Hülsenteilende 16 und zylinderförmiger Vorsprung 15 mit Außengewinde am geschlossenen Hülsenteilende 17, siehe Figur 1A) unmittelbar aneinandergrenzend angeordnet. Das Kompartiment 18 in einem der Probenträger 100 ist mit dem Dichtungselement 19 des benachbarten Probenträgers verschlossen. Durch die geschraubten Träger-Verbindungselemente wird bereist ein gasdichter Abschluss der Probenaufnahmeräume im Verbund des Probenspeichers 200 erreicht. Zur Verbesserung der Dichtheit können zusätzlich Trägerdichtungen vorgesehen sein (siehe Figur 7).

Das Kompartiment 18 besteht aus einem biokompatiblen und kryostabilen Material, wie z. B. Glas oder Kunststoff. Die Formen und Größen der Probenträger 100, 101, 102, ... und der Kompartimente 18 werden in Abhängigkeit von der konkreten Konservierungsaufgabe gewählt. Entsprechend können die Maße und Proportionen dieser Bauteile stark variieren. Das Fassungsvermögen eines Kompartiments kann z. B. bis zu 1 l oder darüber betragen.

Die Kryokonservierung einer Probe 1 mit dem Probenspeicher 200 erfolgt derart, dass zunächst die Probe 1 in Teilproben verteilt oder in Kombination mit einer Referenzprobe in mehreren Probenträgern 100, 101, 102, ... abgelegt wird. Dies erfolgt mit den kapillarförmigen Kompartimenten 18 durch ein Aufsaugen unter der Wirkung von Kapillarkräften. In einem der Probenträger kann erfindungsgemäß eine Kontrollsubstanz angeordnet werden. Die Kontrollsubstanz zeichnet sich z. B. durch eine Wechselwirkung mit der Probe 1 aus, wenn diese in Kontakt miteinander kommen. Als Kontrollsubstanz kann z. B. eine toxische Substanz verwendet werden, die zur Zerstörung der Probe bei einem Auftreten einer Undichtigkeit des Dichtungselements 19 oder der Wand des Kompartiments 18 führt. Des weiteren können die Probe 1 und dielKontrollsubstanz 1 ein Zweikomponentensystem bilden, welches erst bei gegenseitigem Kontakt reagiert. Die Bereitstellung der Kontrollsubstanz ermöglicht eine interne Qualitätskontrolle in jedem der Probenträger.

Anschließend erfolgt die Verbindung der Probenträger 100, 101, 102, ... zur Bildung des linearen Stapels 210. Am offenen Ende des Stapels 210 wird wie gezeigt ein Probenträger 104 ohne eine Probe oder alternativ ein Deckelteil (siehe z. B. Figur 6) angebracht. Anschließend wird der beschickte Probenspeicher 200 in eine Umgebung reduzierter Temperatur, z. B. eine Kühleinrichtung wie einen Kryotank, mit einer Temperatur im Bereich von -30° C bis -200° C überführt.

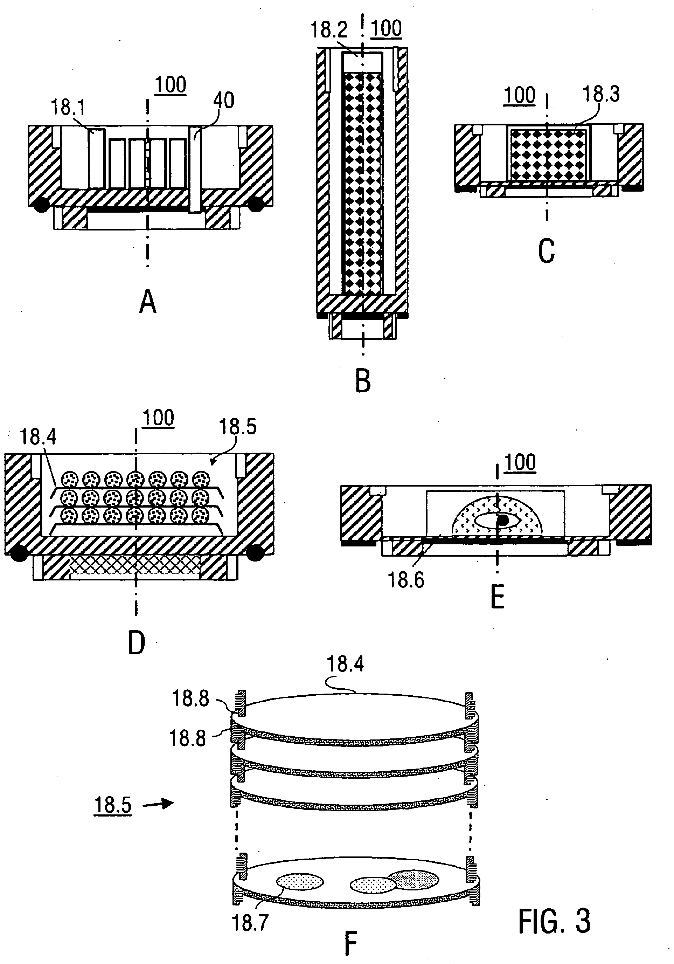

Die Figur 3 zeigt verschiedene Varianten der ersten Ausführungsform des erfindungsgemäßen Probenträgers 10, bei denen am Bodenelement 12 ein Array von kapillarförmigen Kompartimenten 18.1 (Figur 3A), ein Becher-Kompartiment 18.2 (Figur 3B), ein Schalen-Kompartiment 18.3 (Figur 3C), ein Substratstapel 18.5 mit mehreren Substraten 18.4 zum adhärenten Anhaften tropfenförmiger Proben (Figuren 3D und 3F) oder eine Einzeltropfenaufnahme 18.6 (Figur 3E) angeordnet ist. Die Merkmale der Figuren 3A bis 3F können entsprechend bei einem Probenträger gemäß Figur 1C vorgesehen sein.

Das Kapillar-Array gemäß Figur 3A hat den Vorteil, dass sich die einzelnen Kapillare 18.1 separat befüllen lassen und einzeln in das Bodenelement 19 einsteckbar sind. Entsprechend können auch im gefrorenen Zustand einzelne Teilproben aus dem Probenträger 100 entnommen, z. B. abgebrochen werden.

Figur 3A illustriert beispielhaft die Bereitstellung eines Leitungselements 40 am Probenträger 100. Das Leitungselement umfasst mindestens eine Lichtleiterfaser 40, die sich durch das Hülsenteil 10 und das Bodenelement 12 mit der Dichtung 19 erstreckt. Im zusammengesetzten Zustand von mehreren Probenträgern 100 sind die Lichtleiterfasern zu einem durchgehenden Lichtleiter verbunden. Analog können ein oder mehrere elektrische Leiter oder Hohlleiter zum Substanztransport vorgesehen sein. Entsprechend kann mindestens ein Leitungselement 40 in einen Probenträger gemäß den anderen Varianten oder der zweiten Ausführungsform der Erfindung integriert sein.

Die Varianten gemäß den Figuren 3D und 3E sind für die Aufnahme von Suspensionstropfen besonders gut geeignet. Die Tropfen werden auf den Substraten 18.4 oder in der Einzeltropfenaufnahme 18.6 deponiert und ortsfest im adhärenten Zustand auch während des Zusammenfügens einer Vielzahl von Probenträgern 100 zu einem Probenspeicher und der folgenden Abkühlung gehaltert. Die Einzeltropfenaufnahme 18.6 ist zur Aufnahme einzelner Zellen oder kleiner Zellgruppen wie z.B. tierische oder humane Stammzellen, differenzierte Zellen, oder Eizellen eingerichtet und hat einen Durchmesser von z.B. 1 mm bis 5 mm.

Figur 3F illustriert weitere Einzelheiten des Substratstapels 18.5. Scheibenförmige Substrate 18.4, die z. B. aus Kunststoff, Aluminium oder textilem Gewebe bestehen und gegebenenfalls auf ihrer Substratfläche strukturierte Bereiche 18.7 zum adhärenten Anhaften von Zellen aufweisen, sind über Schraubelemente 18.8 stapelförmig übereinander verbunden. Der Durchmesser der Substrate ist im Bereich von 1 mm bis 30 cm gewählt.

Die Figuren 3A bis 3E zeigen Trägerdichtungen 17.1, die jeweils umlaufend an einem der Hülsenteilenden 17 vorgesehen sein können und den gasdichten Abschluss der Probenaufnahmeräume im Verbund des Probenspeichers verbessern.

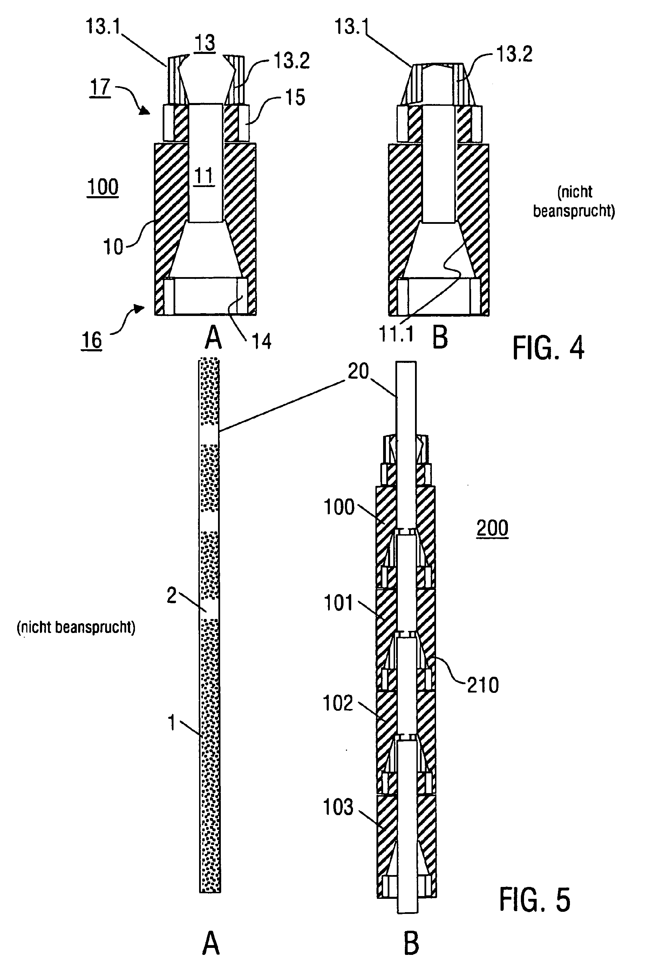

Die Figuren 4 und 5 zeigen eine nicht beanspruchte Alternative eines Probenträgers 100 mit dem Hülsenteil 10, dem inneren Probenaufnahmeraum 11 und der Halteeinrichtung 13. An den axialen Hülsenteilenden 16, 17 sind Träger-Verbindungselemente 14, 15 vorgesehen, die z. B. wie oben beschrieben eine Schraubverbindung bilden.

Im Unterschied zum erfindungsgemäßen Probenträger 100 umfasst die Halteeinrichtung nicht ein durchgehendes Bodenelement, sondern das Klemmelement 13. Das Klemmelement 13 umfasst zwei biegsam am oberen Hülsenteilende 17 oder dem entsprechenden Träger-Verbindungselement 15 angebrachte Klemmarme 13.1, 13.2. Im entspannten Zustand (Figur 4A) des Klemmelements 13 verlaufen die Klemmarme 13.1, 13.2 in axialer Richtung, so dass ein Abstand zwischen den Enden der Klemmarme 13.1., 13.2 gebildet ist. In einem Klemmzustand gemäß Figur 4B sind die Enden der Klemmarme 13.1., 13.2 radial nach innen gebogen, so dass ein in diesem Bereich befindlicher Teil einer Probenkammer zusammengequetscht wird. Die Innenkontur des Probenaufnahmeraums 11 ist mit einer zu dem Klemmelement 13 passenden Anlaufschräge 11.1 ausgestattet, so dass bei der Verbindung von zwei Probenträgern die Klemmarme 13.1, 13.2 zusammengebogen werden. Der Klemmzustand wird daher vorteilhafterweise zwangsläufig eingestellt, indem ein Probenträger 100 mit einem benachbarten Probenträger verbunden wird.

Die praktische Anwendung des alternativen Probenträgers 10 ist schematisch in Figur 5 illustriert. In Figur 5A ist eine schlauchförmige Probenkammer 20 mit einer Suspensionsprobe 1 gezeigt. Die Probenkammer ist mit der Suspensionsprobe 1 kontinuierlich oder mit Teilproben gefüllt, die durch Gasblasen 2 voneinander getrennt sind (siehe DE 102 51 721). Die Probenkammer 20 kann mit Abständen entsprechend den Abständen der Klemmelemente 13 im zusammengesetzten Probenspeicher Verengungen aufweisen, an denen das Zusammendrücken der Probenkammer 20 im Probenspeicher erleichtert wird.

In Figur 5A ist der Probenspeicher 200 mit einem linearen Stapel 210 der alternativen Probenträger 100, 101, 102, ... gezeigt. Die Probenkammer 20 erstreckt sich durch den gesamten Stapel 210 des Probenspeichers 200. Im zusammengesetzten Zustand der Probenträger 100, 101, 102, ... befindet sich das Klemmelement 13 im Klemmzustand, so dass die Probenkammer 20 in regelmäßigen Abständen zusammengequetscht und in Teilproben unterteilt ist.

Der Probenspeicher gemäß Figur 5 wird zusammengesetzt, indem zunächst die Probenträger 100, 101, 102, ... auf die Probenkammer 20 aufgeschoben und anschließend miteinander verbunden werden, wobei bei jeder Verbindung das zugehörige Klemmelement 13 in den Klemmzustand überführt wird. Vorteilhafterweise werden durch die Klemmelemente 13 keine mechanischen Schäden in der Probe, z. B. an biologischen Zellen verursacht, da die Überführung in den Klemmzustand im warmen Zustand erfolgt. Dabei ist die Probe noch flüssig, so dass Probenbestandteile beim Klemmen in andere Bereiche der Probenkammer 20 ausweichen können.

An den Enden der Klemmarme 13.1, 13.2 können Schneidwerkzeuge angeordnet sein, welche die Probenkammer 20 bereits beim Zusammensetzen des Probenspeichers 200 in Einzelkammern zertrennen. In diesem Fall wird die Dichtheit und gegenseitige Trennung der Teilproben in den Teilkammern durch die im Klemmzustand bündig aneinanderliegenden Enden der Klemmarme 13.1, 13.2 gewährleistet. Alternativ kann vorgesehen sein, dass mit den Schneidwerkzeugen die Wände der Probenkammer 20 zunächst ohne Durchtrennung zusammengedrückt werden und erst bei der Entnahme von Probenträgern oder Pröbenträgergruppen im gekühlten Zustand eine Durchtrennung der Probenkammer 20 erleichtert wird.

Die Figuren 6 bis 10 illustrieren beispielhaft die erfindungsgemäße Kombination von Probenträgern oder Probenspeichern mit einem oder mehreren gleichen oder verschiedenartigen Deckelteilen. Allgemein umfasst ein Deckelteil ein zusätzliches Bauteil, das mit einem der Hülsenteilenden verbunden werden kann, um in einem Stapel von Probenträgern einen Abschluss oder ein Zwischenstück zu bilden. Hierzu weist das Deckelteil mindestens ein Deckel-Verbindungselement auf, welches komplementär zu den jeweiligen Träger-Verbindungselementen der Probenträger ist. Da die Deckelteile verschiedene Funktionen erfüllen können und hierzu mit bestimmten Funktionseinrichtungen ausgestattet sind, können die Deckelteile in Abhängigkeit von der Position im Probenspeicher und der Funktion verschiedene Bauformen aufweisen.

In Figur 6A sind zwei Typen von Deckelteilen 31, 32 gezeigt. Das erste Deckelteil 31 weist eine Napfform mit einem Innengewinde auf, das zum Träger-Verbindungselement des obersten Probenträgers 100 passt. Das Deckelteil 31 bildet einen Verschluss des obersten Probenträgers 100. Zusätzlich kann in das Deckelteil 31 ein elektronischer Chip, ein Transponder oder ein RFID-System oder eine Markierung, wie z. B. ein linearer oder mehrdimensionaler Strichcode integriert sein.

Am unteren Ende des Probenspeichers 200 ist als Deckelteil ein Basisteil 32 mit einer sich radial erstreckenden Plattform 33 gezeigt. Das Basisteil 32 ist mit dem Deckel-Verbindungselement 34 in den untersten Probenträger 104 eingeschraubt. Das Basisteil 32 ist des weiteren mit einem Sensor 35 ausgestattet, der beispielsweise der Messung von Temperatur, Vibrationen, Beschleunigungen oder Drehmomenten dient. In das Basisteil 32 können weitere elektronische Komponenten, wie z.B. Multiplexer, Verstärker und dgl. integriert sein, die an die Betriebstemperaturen bei der Kryokonservierung adaptiert sind. Des weiteren kann die Plattform 33 auf ihrer Unterseite eine Markierung, z. B. einen Strichcode oder einen Speicherchip tragen, wie schematisch in den Figuren 6B und 6C gezeigt ist.

Eine weitere Funktionseinrichtung, die in das Deckelteil 30 integriert sein kann, umfasst ein Kontrollelement, das eine Erwärmung durch eine Strukturänderung (z. B. Schmelzen einer gefrorenen Eiskugel), oder einen Farbumschlag anzeigt. Des weiteren kann das Deckelteil eine Kühlkapazität enthalten, mit der für die Dauer von Manipulationen am gekühlten Probenspeicher außerhalb einer Kühleinrichtung den Probenträgern Wärme entzogen wird.

Figur 7 zeigt weitere Beispiele erfindungsgemäß verwendeter Deckelteile, die als Abschlussstopfen 36 (Figur 7A) oder Zwischenstück 38 (Figur 7B) gebildet sind. Der Abschlussstopfen 36 kann mit einer Zusatzdichtung 37 (Figur 7B) ausgestattet sein, die einem vollständigen Verschluss des Probenspeichers dient z. B. aus PTFE oder einem ähnlich temperaturstabilen Material besteht. Vorzugsweise wird die Zusatzdichtung 37 bei der Kryokonservierung von Proben in flüssigem Stickstoff oder bei der Kryokonservierung von pathogenen Proben verwendet. Figur 7C zeigt die Wirkung der in den Figuren 3A bis 3E illustrierten Trägerdichtungen 17.1..

Anstelle der Zusatzdichtung 37 kann ein weiteres Reservoir vorgesehen sein, in dem eine Vergleichslösung oder eine Markersubstanz zur Anzeige einer unerlaubten Temperaturänderung angeordnet ist. Die Markersubstanz kann bei Überschreitung bestimmter Temperaturgrenzen eine Farb- oder Formänderung (z. B. Schmelzen von Kugeln) zeigen.

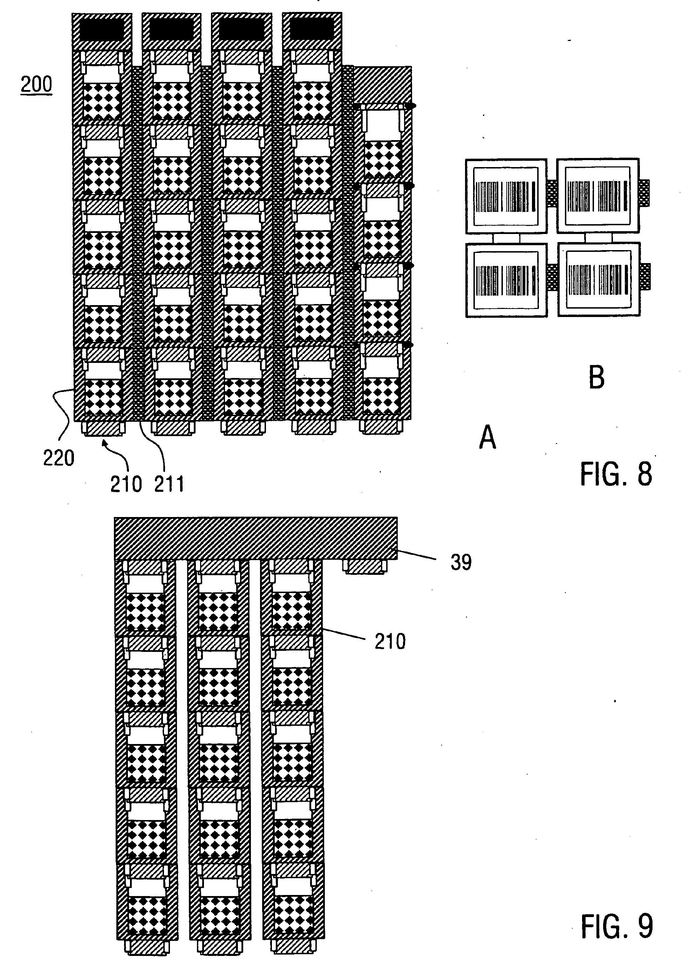

Figur 8 illustriert die Bildung eines Probenspeichers 200 mit einem 2- oder 3-dimensionalen Probenträgerpaket 220. Einzelne Probenträgerstapel 210 sind über seitliche Stapel-Verbindungselemente 211 miteinander verbunden, die z.B. Schienen, Clipverbindungen oder Steckverbindungen.umfassen.

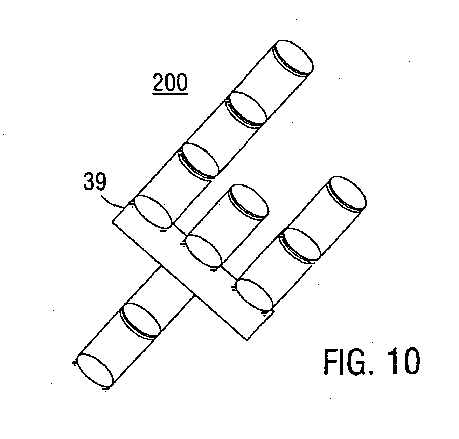

Alternativ kann ein Probenspeicher 200 mit einem Probenträgerpaket durch ein gemeinsames Deckelteil 39 für eine Vielzahl von Probenträgerstapeln 210 gebildet werden (Figuren 9, 10). Diese Variante hat den Vorteil, dass die Probenträgerstapel 210 mit Abständen voneinander angeordnet sind und somit leichter mit einem Kühlmittel beaufschlagt werden können. Die Variante eines gemeinsamen Deckelteils für eine Vielzahl von Probenträgerstapeln kann gemäß Figur 10 dahingehend abgewandelt werden, dass ein selbsttragendes Gesamtsystem von Probenträgern 10 geschaffen wird, wobei die geometrische Form und Anordnung der einzelnen Probenträger die biologische Probenhierarchie, z. B. Zellgenerationen oder Zellpassagen, abbildet.

Die in der vorstehenden Beschreibung, den Zeichnungen und den Ansprüchen offenbarten Merkmale der Erfindung können einzeln oder auch in Kombination für die Verwirklichung der Erfindung in ihren verschiedenen Ausgestaltungen von Bedeutung sein.

## Patentansprüche

1. Probenträger (100, 101, 102,...), insbesondere zur Kryokonservierung biologischer Proben, umfassend:
- ein Hülsenteil (10) mit einem Probenaufnahmeraum (11),
- eine Halteeinrichtung (12, 13), an der eine Probe angeordnet werden kann, und
- Träger-Verbindungselemente (14, 15), die zu entgegengesetzten Hülsenteilenden (16, 17) gerichtet und zueinander passend gebildet sind, so dass mehrere Hülsenteile (16) zusammensetzbar sind
**dadurch gekennzeichnet, dass**
- die Halteeinrichtung ein Bodenelement (12) umfasst, mit dem der Probenaufnahmeraum (11) an einem der Hülsenteilenden (17) verschlossen ist, und
- an dem Bodenelement (12) mindestens ein Kompartiment (18) als separates Gefäß zur Aufnahme der Probe angeordnet ist.

2. Probenträger nach Anspruch 1, bei dem das mindestens eine Kompartiment die Form einer Kapillare (18.1), eines Bechers (18.2) oder einer flachen Schale (18.3) aufweist.

3. Probenträger nach Anspruch 1 oder 2, bei dem an dem Bodenelement eine Vielzahl von Kompartimenten (18.1) zur Aufnahme der Probe angeordnet ist.

4. Probenträger nach einem der Ansprüche 1 bis 3, bei dem das Bodenelement auf einer zum Probenaufnahmeraum entgegengesetzten Seite ein Dichtungselement (19) aufweist, mit dem das mindestens eine Kompartiment eines benachbarten Probenträgers verschlossen werden kann.

5. Probenträger nach Anspruch 1, bei dem das Bodenelement (12) mindestens ein Substrat (18.4) zum adhärenten Anhaften mindestens einer Probe aufweist.

6. Probenträger nach Anspruch 5, bei dem das Bodenelement (12) einen Substratstapel (18.5) zum adhärenten Anhaften einer Vielzahl von Proben aufweist.

7. Probenträger nach einem der Ansprüche 1 bis 6, bei dem das mindestens eine Kompartiment (18) auf der zum Probenaufnahmeraum (11) des zugehörigen Hülsenteils (10) weisenden Seite des Bodenelements (19) angeordnet ist.

8. Probenträger nach einem der Ansprüche 1 bis 7, bei dem das mindestens eine Kompartiment (18) auf der zum Probenaufnahmeraum (11) des zugehörigen Hülsenteils (10) entgegengesetzten Seite des Bodenelements (19) angeordnet ist.

9. Probenträger nach mindestens einem der vorhergehenden Ansprüche, bei dem die Träger-Verbindungselemente (15, 16) dazu eingerichtet sind, wenigstens einen der Verbindungstypen herzustellen, die eine Bajonettverbindung, eine Schraubverbindung, eine Steckverbindung und eine Magnetverbindung umfassen.

10. Probenträger nach mindestens einem der vorhergehenden Ansprüche, bei dem der Probenaufnahmeraum (11) an jedem der Hülsenteilenden mit angesetzten Hülsenteilen weiterer Probenträger gasdicht verschließbar ist.

11. Probenträger nach mindestens einem der vorhergehenden Ansprüche, bei dem das Hülsenteil (10) eine Außenkontur aufweist, die mindestens eine Eingriffsfläche für ein Werkzeug bildet.

12. Probenträger nach mindestens einem der vorhergehenden Ansprüche, bei dem das Hülsenteil (10) an einem der Hülsenteilenden ein Deckelteil (30) trägt.

13. Probenträger nach Anspruch 12, bei dem das Deckelteil mindestens ein Deckel-Verbindungselement (35, 36) aufweist, das passend zu einem der Träger-Verbindungselemente (15, 16) des Hülsenteils (10) geformt ist.

14. Probenträger nach Anspruch 12 oder 13, bei dem das Deckelteil wenigstens eine der Funktionseinrichtungen aufweist, die einen elektronischen Speicher (31), einen Transponder (34), einen Rechnerschaltkreis, ein RFID-System, eine Markierung (33), einen Sensor, ein mechanisches Halteelement (32) umfassen.

15. Probenträger nach mindestens einem der vorhergehenden Ansprüche, der mindestens ein Leitungselement (40) aufweist, das sich zwischen den Hülsenteilenden (16, 17) erstreckt.

16. Probenträger nach Anspruch 15, bei dem das mindestens eine Leitungselement (40) mindestens eines von einem elektrischen Leiter, einem optischen Leiter und einem Hohlleiter zum Substanztransport umfasst.

17. Probenspeicher (200), insbesondere zur Kryokonservierung einer Vielzahl biologischer Proben, der einen Verbund einer Vielzahl von Probenträgern (10) nach mindestens einem der vorhergehenden Ansprüche umfasst.

18. Probenspeicher nach Anspruch 17, bei dem der Verbund einen Stapel (210) von Probenträgern (100, 101, 102,...) umfasst, die unmittelbar aneinandergrenzend mit ihren Träger-Verbindungselementen (15, 16) zusammengesetzt sind.

19. Probenspeicher nach Anspruch 18, bei dem die mit jeweils einem der Probenträger (100, 101, 102,...) verbundene Probe im Probenaufnahmeraum (11) des Hülsenteils (10) des betreffenden Probenträgers (100, 101, 102,...) angeordnet ist.

20. Probenspeicher nach Anspruch 18, bei dem die mit jeweils einem der Probenträger (100, 101, 102,...) verbundene Probe im Probenaufnahmeraum (11) des Hülsenteils (10) eines benachbarten Probenträgers (100, 101, 102,...) angeordnet ist.

21. Probenspeicher nach mindestens einem der Ansprüche 17 bis 20, bei dem der Verbund einen Stapel von Probenträgern (10) und Deckelteilen (30) umfasst, die unmittelbar aneinandergrenzend mit ihren Träger- und Deckel-Verbindungselementen (15, 16, 35, 34) zusammengesetzt sind.

22. Probenspeicher nach mindestens einem der Ansprüche 17 bis 21, bei dem der Verbund mehrere Stapel (210, 220) von Probenträgern umfasst, die nebeneinander angeordnet sind.

23. Probenspeicher nach Anspruch 22, bei dem die Stapel von Probenträgern (210, 220) radial unmittelbar aneinandergrenzend durch Speicher-Verbindungselemente verbunden sind.

24. Probenspeicher nach Anspruch 23, bei dem die Stapel (230) von Probenträgern radial beabstandet durch ein gemeinsames Deckelteil (38) verbunden sind.

25. Verfahren zur Kryokonservierung biologischer Proben (1) in Probenträgern (100, 101, 102,...) nach mindestens einem der Ansprüche 1 bis 16, mit den Schritten:
- Probenablage in den Probenträgern (100, 101, 102,...),
- Verbindung der Probenträger (100, 101, 102,...) zu einem Probenspeicher (200) nach mindestens einem der Ansprüche 17 bis 24, und
- Überführung des Probenspeichers (200) in eine Umgebung reduzierter Temperatur.

26. Verfahren nach Anspruch 25, bei dem die Probenablage eine Aufnahme der Probe (1) in das mindestens eine Kompartiment (18) des Probenträgers unter der Wirkung von Kapillarkräften umfasst.

27. Verfahren nach Anspruch 25, bei dem die Probenablage eine Aufnahme der Probe in eine schlauchförmige Probenkammer (20) umfasst, wobei zur Verbindung der Probenträger (100) eine Reihe von Hülsenteilen (10) auf die Probenkammer (20) aufgezogen und miteinander verbunden werden.

28. Verfahren nach mindestens einem der Ansprüche 25 bis 27, bei dem die Proben (1) Suspensionsproben, Gewebeproben oder Organproben umfassen.

## Claims

1. A sample carrier (100, 101, 102,...), especially for the cryopreservation of biological samples, comprising:
- a casing part (10) with a sample receiving space (11),
- a holding device (12, 13), on which a sample can be arranged, and
- carrier connection elements (14, 15), that are directed to opposite casing part ends (16, 17) and are formed in such a manner that they fit one another so that several casing parts (16) can be assembled,
**characterized in that**
- the holding device comprises a bottom element (12) with which the sample receiving space (11) is closed on one of the casing part ends (17), and
- at least one compartment (18) for receiving the sample is arranged as a separate vessel on the bottom element (12).

2. The sample carrier according to Claim 1, wherein the at least one compartment has the form of a capillary (18.1), a beaker (18.2) or a flat dish (18.3).

3. The sample carrier according to Claim 1 or 2, wherein a plurality of compartments (18.1) for receiving the sample is arranged on the bottom element.

4. The sample carrier according to one of Claims 1 to 3, wherein the bottom element comprises a sealing element (19) on a side opposite the sample receiving space, with which the at least one compartment of an adjacent sample carrier can be closed.

5. The sample carrier according to Claim 1, wherein the bottom element (12) comprises at least one substrate (18.4) for the adherent adhering of at least one sample.

6. The sample carrier according to Claim 5, wherein the bottom element (12) comprises a substrate stack (18.5) for the adherent adhering of a plurality of samples.

7. The sample carrier according to one of Claims 1 to 6, wherein the at least one compartment (18) is arranged on the side of the bottom element (19) facing the sample receiving space (11) of the associated casing part (10).

8. The sample carrier according to one of Claims 1 to 7, wherein the at least one compartment (18) is arranged on the side of the bottom element (19) opposite the sample receiving space (11) of the associated casing part (10).

9. The sample carrier according to at least one of the previous claims, wherein the carrier connection elements (15, 16) are adapted to create at least one of the connection types, that comprise a bayonet connection, a screw connection, a plug-in connection and a magnet connection.

10. The sample carrier according to at least one of the previous claims, wherein the sample receiving space (11) can be closed gas-tight on each of the casing part ends with put on casing parts of further sample carriers.

11. The sample carrier according to at least one of the previous claims, wherein the casing part (10) has an outer contour that forms at least one engagement surface for a tool.

12. The sample carrier according to at least one of the previous claims, wherein the casing part (10) carries a cover part (30) on one of the casing part ends.

13. The sample carrier according to Claim 12, wherein the cover part comprises at least one cover connection element (35, 36) formed to fit one of the carrier connection elements (15, 16) of the casing part (10).

14. The sample carrier according to Claim 12 or 13, wherein the cover part comprises at least one of the function devices, that comprise an electronic memory (31), a transponder (34), a computer circuit, an RFID system, a marking (33), a sensor, a mechanical holding element (32).

15. The sample carrier according to at least one of the previous claims that comprises at least one conduction element (40) extending between the casing part ends (16, 17).

16. The sample carrier according to Claim 15, wherein the at least one conduction element (40) comprises at least one of an electrical conductor, an optical conductor and a hollow conductor for substance transport.

17. Sample storage (200), especially for the cryopreservation of a plurality of biological samples, that comprises a combination of a plurality of sample carriers (10) according to at least one of the previous claims.

18. The sample storage according to Claim 17, wherein the combination comprises a stack (210) of sample carriers (100, 101, 102, ...) that are assembled immediately adjacent to each other with their carrier connection elements (15, 16).

19. The sample storage according to Claim 18, wherein the sample connected to one of the sample carriers (100, 101, 102, ...) is arranged in the sample receiving space (11) of the casing part (10) of said sample carrier (100, 101, 102, ...).

20. The sample storage according to Claim 18, wherein the sample connected to one of the sample carriers (100, 101, 102, ...) is arranged in the sample receiving space (11) of the casing part (10) of an adjacent sample carrier (100, 101, 102, ...).

21. The sample storage according to at least one of Claims 17 to 20, wherein the combination comprises a stack of sample carriers (10) and cover parts (30) that are assembled immediately adjacent to each other with their carrier- and cover connection elements (15, 16, 35, 34).

22. The sample storage according to at least one of Claims 17 to 20, wherein the combination comprises several stacks (210, 220) of sample carriers arranged adjacent to each other.

23. The sample storage according to Claim 22, wherein the stacks of sample carriers (210, 220) are connected radially immediately adjacent to each other by storage connection elements.

24. The sample storage according to Claim 23, wherein the stacks (230) of sample carriers are connected radially distanced by a common cover part (38).

25. A method for the cryopreservation of biological samples (1) in sample carriers (100, 101, 102, ...) according to at least one of Claims 1 to 16, comprising the steps:
- depositing of samples in the sample carriers (100, 101, 102, ...),
- connecting of the sample carriers (100, 101, 102, ...) to a sample storage (200) according to at least one of Claims 17 to 24, and
- transfer of the sample storage (200) into an environment of reduced temperature.

26. The method according to Claim 25, wherein the depositing of samples comprises a receiving of the sample (1) in the at least one compartment (18) of the sample carrier under the action of capillary forces.

27. The method according to Claim 25, wherein the depositing of samples comprises a receiving of the sample in a hose-shaped sample chamber (20) and wherein a series of casing parts (10) can be drawn onto the sample chamber (20) and connected to each other in order to connect the sample carriers (100).

28. The method according to at least one of Claims 25 to 27, wherein the samples (1) comprise suspension samples, tissue samples or organ samples.

## Revendications

1. Porte-échantillon (100, 101, 102,...), en particulier pour la cryoconservation d'échantillons biologiques, comprenant
- une partie d'enveloppe (10) avec une chambre à échantillon (11),
- un dispositif de maintien (12, 13) sur lequel un échantillon peut être disposé, et
- des éléments de liaison (14, 15) au support, orientés vers des extrémités (16, 17) opposées de la partie d'enveloppe et de formes complémentaires l'un à l'autre, de manière à permettre l'assemblage de plusieurs parties d'enveloppe (16),
**Caractérisé en ce que**
- le dispositif de maintien comprend un élément de fond (12) au moyen duquel la chambre à échantillon (11) est obturée à une des extrémités de la partie d'enveloppe (17), et
- au moins un compartiment (18) est disposé sur l'élément de fond (12), en tant que récipient séparé pour la réception de l'échantillon.

2. Porte-échantillon selon la revendication 1, où le ou les compartiments ont la forme d'un capillaire (18.1), d'un godet (18.2) ou d'une coupe aplatie (18.3).

3. Porte-échantillon selon la revendication 1 ou la revendication 2, où une pluralité de compartiments (18.1) pour la réception de l'échantillon est disposée sur l'élément de fond (12).

4. Porte-échantillon selon l'une des revendications 1 à 3, où l'élément de fond (12) comporte un élément d'étanchéité joint (19) sur un côté opposé à la chambre à échantillon, au moyen duquel au moins un compartiment d'un porte-échantillon contigu peut être obturé.

5. Porte-échantillon selon la revendication 1, où l'élément de fond (12) comporte au moins un substrat (18.4) pour la fixation par adhérence d'au moins un échantillon.

6. Porte-échantillon selon la revendication 5, où l'élément de fond (12) comporte une pile de substrats (18.5) pour la fixation par adhérence d'une pluralité d'échantillons.

7. Porte-échantillon selon l'une des revendications 1 à 6, où au moins un compartiment (18) est disposé sur le côté de l'élément de fond (12) opposé à la chambre à échantillon (11) de la partie d'enveloppe (10) correspondante.

8. Porte-échantillon selon l'une des revendications 1 à 7, où au moins un compartiment (18) est disposé sur le côté de l'élément de fond (12) distant de la chambre à échantillon (11) de la partie d'enveloppe (10) correspondante.

9. Porte-échantillon selon au moins une des revendications précédentes, où les éléments de liaison (15, 16) au support sont prévus pour réaliser au moins un des types de connexion parmi une connexion à baïonnette, une connexion à vis, une connexion à fiche et une connexion magnétique.

10. Porte-échantillon selon au moins une des revendications précédentes, où la chambre à échantillon (11) peut être obturée de manière étanche aux gaz à chacune des extrémités de la partie d'enveloppe par des parties d'enveloppe rapportées d'autres porte-échantillons.

11. Porte-échantillon selon au moins une des revendications précédentes, où la partie d'enveloppe (10) présente un contour extérieur qui forme au moins une surface de saisie pour un outil.

12. Porte-échantillon selon au moins une des revendications précédentes, où la partie d'enveloppe (10) supporte une pièce de couvercle (30) à une des extrémités de la partie d'enveloppe.

13. Porte-échantillon selon la revendication 12, où la pièce de couvercle présente au moins un élément de liaison (35, 36) au couvercle, de forme complémentaire à un des éléments de liaison (15, 16) au support de la partie d'enveloppe (10) ;

14. Porte-échantillon selon la revendication 12 ou la revendication 13, où la pièce de couvercle présente au moins un dispositif fonctionnel parmi une mémoire électronique (31), un transpondeur (34), un circuit de calculateur, un système RFID, un marquage (33), un capteur, un élément de maintien mécanique (32).

15. Porte-échantillon selon au moins une des revendications précédentes, présentant au moins un élément de conduite (40) qui s'étend entre les extrémités (16, 17) de la partie d'enveloppe.

16. Porte-échantillon selon la revendication 15, où au moins un élément de conduite (40) comprend au moins un conducteur parmi un conducteur électrique, un conducteur optique et un conducteur creux pour le transport de substance.

17. Réservoir à échantillons (200), en particulier pour la cryoconservation d'une pluralité d'échantillons biologiques, comprenant un assemblage d'une pluralité de porte-échantillons (10) selon au moins une des revendications précédentes.

18. Réservoir à échantillons selon la revendication 17, où l'assemblage comprend une pile (210) de porte-échantillons (100, 101, 102, ...), lesquels sont assemblés de manière immédiatement contiguë les uns aux autres au moyen de leurs éléments de liaison (15, 16) au support.

19. Réservoir à échantillons selon la revendication 18, où l'échantillon associé à un des porte-échantillons (100, 101, 102, ...) est disposé dans la chambre à échantillon (11) de la partie d'enveloppe (10) du porte-échantillon (100, 101, 102, ...) concerné.

20. Réservoir à échantillons selon la revendication 18, où l'échantillon associé à un des porte-échantillons (100, 101, 102, ...) est disposé dans la chambre à échantillon (11) de la partie d'enveloppe (10) d'un porte-échantillon (100, 101, 102, ...) contigu.

21. Réservoir à échantillons selon au moins une des revendications 17 à 20, où l'assemblage comprend une pile de porte-échantillons (10) et de pièces de couvercle (30), lesquels sont assemblés de manière immédiatement contiguë les uns aux autres par leurs éléments de liaison (15, 16, 35, 34) au support et au couvercle.

22. Réservoir à échantillons selon au moins une des revendications 17 à 21, où l'assemblage comprend plusieurs piles (210, 220) de porte-échantillons disposées côte à côte.

23. Réservoir à échantillons selon la revendication 22, où les piles de porte-échantillons (210, 220) sont assemblées de manière immédiatement contiguë les unes aux autres radialement au moyen d'éléments de liaison de réservoir.

24. Réservoir à échantillons selon la revendication 23, où les piles de porte-échantillons (210, 220) sont espacées radialement entre elles par une pièce de couvercle (38) commune.

25. Procédé de cryoconservation d'échantillons biologiques (1) dans des porte-échantillons (100, 101, 102,...) selon au moins une des revendications 1 à 16, comportant les étapes suivantes :
- mise en place d'échantillon dans le porte-échantillon (100, 101, 102,...),
- assemblage des porte-échantillons (100, 101, 102,...) pour former un réservoir à échantillons (200) selon au moins une des revendications 17 à 24, et
- transfert du réservoir à échantillons (200) dans un environnement à température réduite.

26. Procédé selon la revendication 25, où la mise en place d'échantillon comprend une réception de l'échantillon (1) dans le ou les compartiments (18) du porte-échantillon sous l'effet de forces capillaires.

27. Procédé selon la revendication 25, où le dépôt d'échantillon comprend une réception de l'échantillon dans un compartiment d'échantillon tubulaire (20), une série de parties d'enveloppe (10) étant montées sur le compartiment d'échantillon (20) et raccordées l'une à l'autre pour l'assemblage des porte-échantillons (100).

28. Procédé selon au moins une des revendications 25 à 27, où les échantillons (1) comprennent des échantillons de suspensions, des échantillons de tissus ou des échantillons d'organes.
